# EUROPÄISCHE PATENTANMELDUNG

(11) **EP 0 789 463 A2**
(43) Veröffentlichungstag der Anmeldung: **13.08.1997**
(21) Anmeldenummer: 97101902.1
(22) Anmeldetag: 06.02.1997
(51) Int. Cl.: H04B 17/00

(54) **Verfahren zur Parametrierung einer Empfangseinrichtung mit zugeordneter intelligenter Antenneneinrichtung, sowie entsprechende Empfangseinrichtung und Funkstation**

(30) Priorität: 09.02.1996 DE 19604772
(71) Anmelder: SIEMENS AKTIENGESELLSCHAFT, 80333 München (DE)
(72) Erfinder: Schreib, Franz, Dipl.-Ing., 81475 München (DE)

(57) **Zusammenfassung**

Es wird ein Verfahren zur Parametrierung zumindest einer Empfangseinrichtung und eine Empfangseinrichtung für eine Funkstation angegeben, wobei durch eine intelligente Antenneneinrichtung mehrere dekorrelierte Signale empfangen werden. Antennengewichtfaktoren zur Unterdrückung von empfangenen Störgrößen und Kanalkoeffizienten zum Ausgleich der Laufzeitunterschiede verschiedener Signalkomponenten eines Empfangssignals werden gleichzeitig bestimmt. Während einer Trainingssequenz werden in der Empfangseinrichtung vorliegende Testdaten in einem Kanalmodell mit Kanalkoeffizienten bewertet und empfangene Testdaten mit Antennengewichtfaktoren bewertet und zu Antennendaten bzw. Modellgrößen überlagert. Die Minimierung der Abweichung von Antennendaten und Modellgrößen wird unter Ausschluß der Triviallösung vorgenommen. Der Erfindungsgegenstand eignet sich insbesondere für Basisstationen in Mobilfunksystemen.

## Beschreibung

Die Erfindung betrifft ein Verfahren zur Parametrierung einer Empfangseinrichtung mit zugeordneter intelligenter Antenneneinrichtung in einem Funksystem und eine Empfangseinrichtung bzw. eine Funkstation mit zumindest einer Empfangseinrichtung.

In einem Funksystem werden von einer sendenden Funkstation zu einer empfangenen Funkstation Informationen übertragen. Diese Informationen erreichen die empfangene Funkstation in Form von Empfangssignalen. Durch diverse externe Einflüsse erreichen die Empfangssignale die empfangende Funkstation über mehrere Laufwege. Die den verschiedenen Laufwegen entsprechenden Signalkomponenten treffen bei der empfangenden Funstation zu aufeinanderfolgenden Zeitpunkten ein. In der empfangenden Funkstation besteht nun das Problem, diese Signalkomponenten, die zudem durch weitere Störkomponenten beeinflußt sein können, zu entzerren, die Fehler zu korrigieren und die übertragene Information zu dekodieren.

Eine Funkstation besteht u.a. aus einer Antenneneinrichtung, die wie bekannt aus R.Roy, T.Kailath, 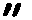 Esprit - Estimation of Signal Parameters Via Rotational Invariance Techniques 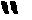 , IEEE Transactions on acoustics, speech and signal processing, Vol.37, No.7, Juli 1989, S. 984-995, eine aus mehreren Antennenelementen bestehende intelligente Antenneneinrichtung sein kann, und einer Empfangseinrichtung, die die Auswertung der Empfangssignale vornimmt. Zur Auswertung der Empfangssignale werden innerhalb der Empfangseinrichtung Parameter bestimmt. Diese Parameter sind z.B. Antennengewichtfaktoren, die die einzelnen Empfangssignale der Antennenelemente einer intelligenten Antenneneinrichtung bewerten, und aus W.Koch, 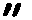 Optimum and sub-optimum detection of coded data distured by time-varying intersymbol interference 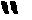 , IEEE Proceedings 1990, S.1679-84 bekannte Kanalkoeffizienten. Diese in einem Kanalmodell verwendeten Kanalkoeffizienten dienen dazu, die verschiedenen nacheinander eintreffenden Signalkomponenten eines Empfangssignals geeignet zu überlagern.

Es ist weiterhin bekannt, die aus den Empfangssignalen durch Übertragung ins Basisband und Analog/Digitaiwandlung gewonnenen Antennendaten, sowie die Kanalkoeffizienten einem Detektor zuzuführen, der die Antennendaten entzerrt und die Fehlerkorrektur vornimmt. Die im Ausgang des Detektors rekonstruierten Symbole der Signale werden daraufhin in einem Dekoder, z.B. einem Viterbi-Dekoder, dekodiert.

Aus Mobilfunksystemen, siehe M.Mouly, M.-B.Pautet, 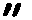 The GSM System for Mobile Communications 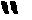 , 49. rue Louise Bruneau, F-91120 Palaiseau, Frankreich, S.231-237, ist es weiterhin bekannt, sogennante Trainingssequenzen zu nutzen, um empfangende Funkstationen abzugleichen. Zu vorbestimmten Zeitpunkten sendet die sendende Funkstation eine Sequenz digitaler Daten, die der empfangenden Funkstation bekannt ist, d.h. deren Daten in der empfangenden Funkstation unverzerrt vorliegen.

Aufgabe der Erfindung ist es, ein Verfahren zur Parametrierung einer Empfangseinrichtung einer Funkstation, sowie eine derartige Empfangseinrichtung bzw. Funkstation in einem Funksystem anzugeben, die eine Entzerrung und Fehlerkorrektur mit hoher Genauigkeit ermöglichen. Die Aufgabe wird durch das Verfahren nach Patentanspruch 1, und die Empfangseinrichtung nach Patentanspruch 8 bzw. die Funkstation nach Patentanspruch 16 gelöst. Weitere Ausbildungen des erfindungsgemäßen Gedankens sind den Unteransprüchen zu entnehmen.

In einer Funkstation mit Empfangseinrichtung und zugeordneter intelligenter Antenneneinrichtung werden zumindest zwei zumindest teilweise dekorrelierte Empfangssignale empfangen.

Diese Empfangssignale werden daraufhin in der Empfangseinrichtung in digitale Signale umgewandelt und in einem der Empfangseinrichtung zugehörigen räumlichen Kanalschätzer jeweils mit Antennengewichtfaktoren bewertet und die zumindest zwei bewerteten Signale zu Antennendaten überlagert. Weiterhin enthält die Empfangseinrichtung ein Kanalmodell, mit dem der Funkkanal zwischen sendender und empfangender Funkstation nachgebildet werden kann. Das Kanalmodell wird dabei durch Kanalkoeffizienten charakterisiert. Einem in der Empfangseinrichtung enthaltenen Detektor zur Entzerrung und Fehlerkorrektur der Antennendaten werden die Antennendaten und die bestimmten Kanalkoeffizienten zugeführt.

Während einer Trainingssequenz repräsentieren die Signale empfangene Testdaten, die zusätzlich ungestört in der Empfangseinrichtung vorliegen. Den empfangenen Testdaten zuordenbare Antennendaten und aus dem mit den Testdaten gespeisten Kanalmodell abgeleitete Modellgrößen werden einem Rechenwerk zugeführt. Im Rechenwerk, das ebenfalls der Empfangseinrichtung zugehörig ist, werden nun gleichzeitig die Antennengewichtfaktoren zur Unterdrückung von empfangenen Störgrößen und die Kanalkoeffizienten zum Ausgleich der Laufzeitunterschiede verschiedener Signalkomponenten eines Empfangssignals bestimmt. Dazu wird ein Algorithmus zu Hilfe genommen, der die Minimierung der Abweichung von Antennendaten der Trainingssequenz und Modellgrößen der Trainingssequenz vornimmt. Die bestimmten Antennengewichtfaktoren und Kanalkoeffizienten können danach auch zur Bewertung der Signale außerhalb der Trainingssequenz herangezogen werden.

Die Kombination von räumlichen Kanalschätzer und Kanalmodell, sowie die gleichzeitige Berechnung der Parameter für die Antennengewichtfaktoren und die Kanalkoeffizienten in einem Rechenwerk schafft eine wesentliche Verbesserung der Funktionsweise der Empfangseinrichtung in Bezug auf die Rekonstruktion von übertragenen Informationen. Mit einem einfachen Algorithmus können die zur Einstellung der Empfangseinrichtung benötigten Parameter gemeinsam bestimmt werden. Es ist dabei die Nebenbedingung zu beachten, daß die Triviallösung mit auf den Wert null gesetzten Antennengewichtfaktoren und Kanalkoeffizienten ausgeschlossen wird. Im Algorithmus ist eine entsprechende Nebenbedingung vorzusehen.

Je nach Anzahl der in der Empfangseinrichtung vorliegenden teilweise dekorrelierten Empfangssignale kann eine verbesserte Störsignalunterdrückung und ein Ausgleich der Mehrwegeausbreitung vorgenommen werden. Zur vollständigen Auslöschung von Störsignalen muß sich die Anzahl der zumindest teilweise dekorrelierten Empfangssignale aus der Addition von eins zu der mit der Anzahl der Kanalkoeffizienten multiplizierten Anzahl zu berücksichtigender Störsignale ergeben. Jedoch auch zwei zumindest teilweise dekorrelierte Empfangssignalen oder jede andere Anzahl zwischen diesen beiden Eckwerten ergibt eine deutliche Verbesserung der Empfangsqualität, wodurch sich bei einem Einsatz der Funkstation in einem Funksystem auch ein Zugewinn an Systemleistung z.B. bei Mobilfunksystemen durch eine dadurch ermöglichte höhere Dichte an Mobilstationen ergibt.

Die zueinander zumindest teilweise dekorrelierten Empfangssignale können vorteilhafterweise durch separate Antennen oder durch mehrmaliges Abtasten durch eine Antenne, jedoch mit jeweils unterschiedlichen Abstrahlungsdiagrammen, der Auswertung durch die Empfangseinrichtung zugeführt werden - Ansprüche 2 und 3. Werden separate Antennen mit unterschiedlichen Abstrahlungsdiagrammen verwendet, müssen diese nicht weiter durch die Empfangseinrichtung gesteuert werden. Wird nur eine Antenne verwendet, verringert sich der hierfür aufgebrachte Aufwand, die Erzeugung unterschiedlicher Abstrahlungsdiagramme in Bezug auf ein auszuwertetes Informationselement in den Empfangssignalen bedarf jedoch einer zusätzlichen elektronischen Steuerung.

Nach weiteren Ausgestaltungen des Erfindungsgegenstandes ist der Algorithmus zur Bestimmung der Antennengewichtfaktoren und der Kanalkoeffizienten unter Ausschluß der Triviallösung derart ausgebildet, daß in der Empfangseinrichtung mehrere Sätze von Antennengewichtfaktoren vorliegen mit denen die empfangenen Testdaten jeweils bewertet werden und daraufhin die Kanalkoeffizienten mit einer minimalen Abweichung von Antennendaten und Modellgrößen bestimmt werden. Die Lösung mit der kleinsten Abweichung, d.h. die zugehörigen Antennengewichtfaktoren und dazu bestimmten Kanalkoeffizienten wird ausgewählt und dient zur Parametrierung der Empfangseinrichtung. Diese Lösung reduziert den Rechenaufwand auf die Bestimmung der Kanalkoeffizienten, währendessen die Antennengewichtfaktoren aus einer Menge bekannter Antennengewichtfaktoren ausgewählt werden.

Eine alternative Variante besteht darin, die Berechnung der kleinsten Fehlerquadrate oder eine Korrelationsrechnung zur Bestimmung der Antennengewichtfaktoren und der Kanalkoeffizienten ohne Vorauswahl heranzuziehen und damit bei in Kauf genommenen etwas größeren Rechenaufwand die Antennengewichtfaktoren und Kanalkoeffizienten aus einer unendlich großen Menge von möglichen Werten auszuwählen, jedoch wiederum unter Ausschluß der Triviallösung. Die Triviallösung, bei der Antennengewichtfaktoren und Kanalkoeffizienten auf null gesetzt sind, entspricht einer möglichen, jedoch unsinnigen Lösung. Folglich ist es nötig, einen der Antennengewichtfaktoren oder der Kanalkoeffizienten auf einen Wert ungleich null festzusetzen.

Nach einer weiteren vorteilhaften Ausgestaltung des Erfindungsgegenstandes wird vor der endgültigen Bestimmung der Antennengewichtfaktoren und der Kanalkoeffizienten eine Synchronisation der empfangenen Testdaten mit den im Kanalmodell verarbeiteten Testdaten vorgenommen. Durch eine nicht vorhersehbare Laufzeit der Empfangssignale der Trainingssequenz zwischen Sender und Empfänger kann der Zeitpunkt des Eintreffens der empfangenen Testdaten in der Empfangseinrichtung nicht mit völliger Sicherheit vorhergesagt werden. Um den Beginn der Trainingssequenz und eine wirkungsvolle Berechnung der Antennengewichtfaktoren und Kanalkoeffizienten ohne störenden Einfluß einer ungenügenden Synchronisation zu gewährleisten, wird deshalb eine Verzögerung berechnet, mit der die Empfangssignale in der Empfangseinrichtung beaufschlagt werden. Die Verzögerung kann z.B. dadurch bestimmt werden, daß an meherern Positionen des Datenstromes der Antennendaten eine Minimierung der Abweichung vorgenommen wird und die optimale Lösung, entspricht der Synchronisation, ausgewählt wird. Daraufhin wird die Verzögerung auch außerhalb der Trainingssequenz herangezogen.

Weiterhin ist es vorteilhaft, die berechneten Antennengewichtfaktoren nicht nur zum Empfang, sondern auch beim Senden innerhalb der gleichen Verkehrsbeziehung, für die zwischen sendender und empfangender reziproke Ausbreitungsverhältnisse vorherrschen, einzusetzen. Durch diese Maßnahme ist es möglich, eine räumliche Selektivität des Abstrahlungsdiagrammes zu erzielen. Durch die Maßnahme können damit auch ungewünschte Interferenzen vermieden und eine höhere Kapazität des gesamten Funksystems erreicht werden. Falls Sende- und Empfangsfrequenz voneinander abweichen, ist eine Transformation der Antennnengewichtkoeffizienten vorzunehmen, so daß das Antennendiagramm in Senderichung dem in Empfangsrichtung entspricht.

In den übrigen Patentansprüchen ist eine Funkstation angegeben, deren Empfangseinrichtung zur Durchführung der Parametrierung entsprechend ausgebildet ist. Vorteilhafterweise wird diese Funkstation in Funksystemen, die im Zeitlagenmultiplex betrieben werden, eingesetzt und die Parametrierung für jede einzelne Zeitlage neu bestimmt. Ein Beispiel für ein im Zeitlagenmultiplex betriebenes Funksystem sind Mobilfunksysteme (GSM, GSM-ähnliche), wobei die Funkstation als Basis-station betrieben wird. Die erfindungsgemäße Empfangseinrichtung bzw. Funkstation und das erfindungsgemäße Verfahren werden insbesondere den speziellen Bedingungen eines Mobilfunksystems gerecht, da sich durch die Mobilität von Kommunikationsendgeräten sich verändernde Ausbreitungsbedingungen ergeben, worauf die Parametrierung der Empfangseinrichtung entsprechend angepaßt werden kann.

Im folgenden soll der Erfindungsgegenstand anhand von zeichnerischen Darstellungen näher erläutert werden.

Dabei zeigen
- FIG 1: ein Blockschaltbild einer Funkstation,
- FIG 2: ein Blockschaltbild eines räumlichen Kanalschätzers während der Parametrierung,
- FIG 3: ein Blockschaltbild der Empfangseinrichtung während des Empfangs mit zuvor bestimmten Parametern außerhalb der Trainingssequenz.

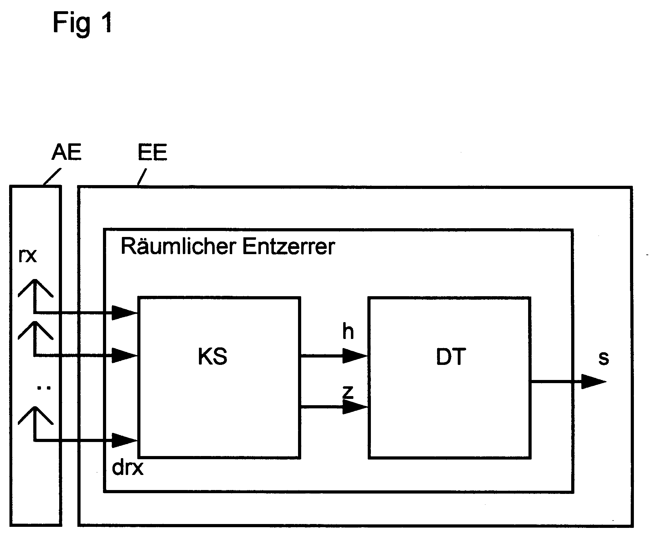

In FIG 1 ist die Empfangseinrichtung EE und die zugeordnete Antenneneinrichtung AE einer Funkstation dargestellt. Diese Funkstation ist Teil eines Funksystems und empfängt von einer sendenden Funkstation dieses Funksystems Empfangssignale rx. Das Funksystem ist beispielsweise ein GSM-Mobilfunksystem, bei dem die in FIG 1 dargestellte Funkstation eine Basisstation darstellt. Basisstationen sind jeweils über eine Luftschnittstelle mit Mobilteilen verbunden, die beispielsweise die sendende Funkstation darstellen. Im weiteren wird für die Basisstation der Empfangsfall dargestellt, nichtsdestotrotz besteht üblicherweise eine zweiseitige Verkehrsbeziehung, d.h. die Basisstation weist auch ein Sendeeinrichtung auf.

Die Antenneneinrichtung AE ist als intelligente Antenneneinrichtung ausgebildet, d.h. mehrere Antennenelemente dieser intelligenten Antenneneinrichtung AE empfangen zum gleichen Zeitpunkt Empfangssignale rx. Durch die sich unterscheidenden Strahlungsdiagramme der Antennenelemente werden damit zumindest zwei zueinander teilweise dekorrelierte Empfangssignale rx durch die intelligente Antenneneinrichtung AE aufgenommen. Die Dekorrelation muß dabei nicht vollständig sein, sondern muß lediglich gewährleisten, daß für ein übertragenes Informationselement teilweise oder völlig dekorrelierte Empfangssignale vorliegen, wodurch zusätzliche Angaben zur Entzerrung und Fehlerkorrektur aus den sich unterscheidenden Empfangssignalen rx gewonnen werden können.

Die zumindest teilweise dekorrelierten Empfangssignale rx können dabei auch dadurch erzeugt werden, daß anstelle mehrerer starrer Antennenelemente auf einem oder mehreren Antennenelementen die Abstrahlungscharakteristik gesteuert wird und mit sich unterscheidenden Abstrahlungscharakteristiken das gleiche Informationselement abgetastet wird, wodurch wiederum zueinander zumindest teilweise dekorrelierte Empfangssignale rx in der intelligenten Antenneneinrichtung AE vorliegen.

Aus den Empfangssignalen rx werden z.B. durch eine Übertragung ins Basisband und darauffolgende Analog/Digitalwandlung digitale Signale drx erzeugt und einem räumlichen Entzerrer, der innerhalb der Empfangseinrichtung EE angeordnet ist, zugeführt. Der räumliche Entzerrer enthält dabei einen räumlichen Kanalschätzer KS und einen Detektor DT. Die digitalen Signale drx dienen als Eingangssignale für den räumlichen Kanalschätzer KS, der mit dem Detektor DT verbunden ist und ihm aus den digitalen Signalen drx abgeleitete Antennendaten z und des weiteren im räumlichen Kanalschätzer KS bestimmte Kanalkoeffizienten h zuführt.

Der Detektor DT nimmt eine Entzerrung und Fehlerkorrektur der Antennendaten z unter Zuhilfenahme der Kanalkoeffizienten h vor und erzeugt Symbole s, die weiteren Einrichtungen der Empfangseinrichtung EE, nicht dargestellt, zugeführt werden, in denen daraufhin eine Dekodierung und ggf. weitere Verarbeitungsschritte vorgenommen werden. Die Symbole s repräsentieren dabei die rekonstruierten, durch Entzerrung und Fehlerkorrektur verarbeiteten Signale rx.

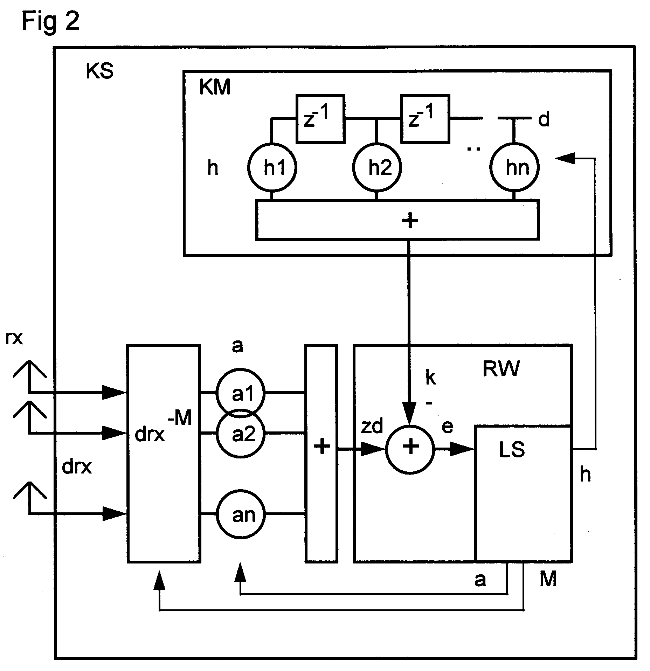

In FIG 2 wird die Funktionsweise des räumlichen Kanalschätzers KS während der Parametrierung erläutert. Die Parametrierung findet während des Empfangs einer Trainingssequenz statt. Während dieser Trainingssequenz werden die Testdaten d von einer sendenden Funkstation an die in FIG 1 dargestellte, empfangende Funkstation übertragen. Durch Mehrwegeausbreitung, Störung und Verzögerung beeinträchtigt treffen die Empfangssignale rx bei der empfangenden Funkstation ein und stehen dem räumlichen Kanaischätzer KS als digitale Signale drx zur Verfügung.

Diese digitalen Signale drx werden daraufhin in einem Speicherelement gespeichert und um eine Verzögerung M verzögert ausgegeben. Die ausgegebenen digitalen Signale drx werden daraufhin jeweils durch Antennengewichtfaktoren a bewertet und anschließend aufsummiert, wobei die Aufsummierung ein Antennendatum zd der Trainingssequenz ergibt. Aufeinanderfolgende Empfangssignale rx ergeben so die Antennendaten zd der Trainingssequenz.

Die in der Empfangseinrichtung EE vorbekannten Testdaten d werden einem Kanalmodell KM zugeführt. Dieses Kanalmodell KM besteht aus Verzögerungsgliedern z⁻¹, die kettenförmig angeordnet sind. Die Testdaten d durchlaufen diese Verzögerungsglieder z⁻¹. Die unverzögerten Testdaten d und die am Ausgang eines jeden Verzögerungsgliedes z⁻¹ anliegenden verzögerten Testdaten d werden jeweils mit einem Kanalkoeffizienten h bewertet und anschließend zu einer Modellgröße k aufsummiert. In diesem Kanalmodell KM wird die Mehrwegeausbreitung simuliert, wobei nacheinander eintreffende Signalkomponenten zu einem gemeinsamen Signal überlagert werden. In Mobilfunksystemen reichen 3 bis 4 Verzögerungsglieder z⁻¹ aus, um die Mehrwegeausbreitung auszugleichen. Die Modellgrößen k sind die Ausgangsgrößen des Kanalmodells KM.

Weiterhin enthält der räumliche Kanalschätzer KS ein Rechenwerk RW, das die Antennendaten zd der Trainingssequenz und die Modellgrößen k vergleicht und die Abweichung e beider Werte bestimmt. Die Abweichung e wird innerhalb des Rechenwerkes RW einer Einheit LS zugeführt, die die für eine minimale Abweichung e erforderlichen Antennengewichtfaktoren a und Kanalkoeffizienten h bestimmt.

Zur Parametrierung wird zuerst die Verzögerung M bestimmt. Die Einheit LS löst das Problem der kleisten Fehlerquadrate an mehreren Positionen des Empfangsdatenstromes, der durch die Antennendaten zd der Trainingssequenz gebildet wird. Die Position mit dem kleinsten quadratischen Fehler stellt die Synchronisationsposition dar. Damit ist auch die Verzögerung M bestimmt, die im weiteren bei der Bearbeitung der Empfangssignale rx auch außerhalb der Trainingssequenz für die gleiche Zeitlage verwendet wird. Bei der Lösung des Problems des kleinsten Fehlerquadrates wird die Nebenbedingung beachtet, daß nicht alle Antennengewichtfaktoren a und Kanalkoeffizienten h gleich null sein dürfen. Deshalb wird z.B einer dieser Werte auf einen Wert ungleich null voreingestellt.

Durch diese Verfahrensweise wird die Synchronisation und die Bestimmung der Antennengewichtfaktoren a und Kanalkoeffizienten h gleichzeitig bewirkt. Bei der Lösung des Problems der kleinsten Fehlerquadrate kann die Abweichung e vorteilhafterweise durch die Summe der quadrierten Kanalkoeffizienten h normalisiert werden, wodurch sich die Synchronisation weiter verbessern läßt. Anstelle der Lösung des Problems der kleinsten Fehlerquadrate können jedoch auch andere geeignete Algorithmen verwendetet werden, die eine Minimierung der Abweichung e herbeiführen. Die durch das Rechenwerk RW bestimmten Kanalkoeffizienten h, Antennengewichtfaktoren a und die Verzögerung M werden daraufhin auch außerhalb der Trainingssequenz zur Verbesserung des Empfangs der Empfangseinrichtung EE herangezogen.

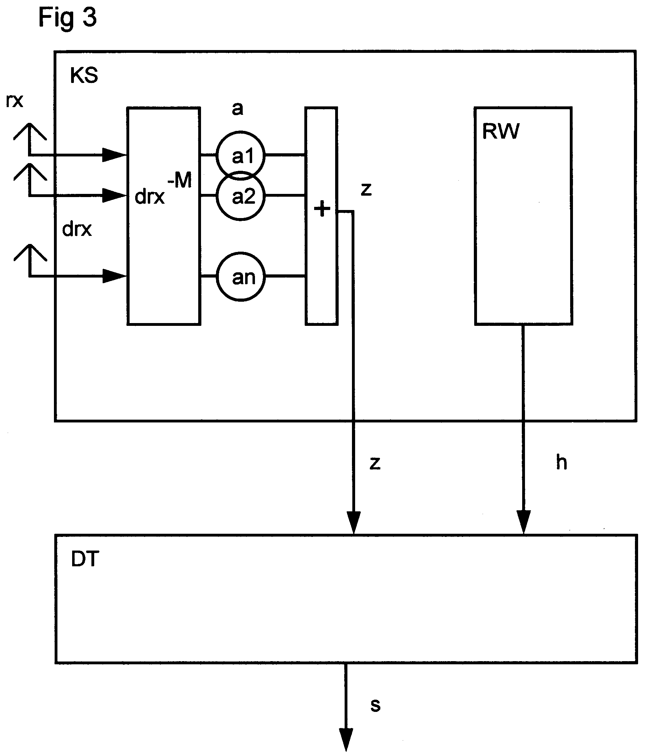

In FIG 3 ist der Empfang und die Weiterverarbeitung der Empfangssignale rx außerhalb der Trainingssequenz dargestellt. Der räumliche Kanaischätzer KS nimmt die digitalen Signale drx auf und verzögert sie entsprechend der zuvor bestimmten Verzögerung M bevor sie durch die bestimmten Antennengewichtfaktoren a bewertet zu Antennendaten z überlagert werden. Diese Antennendaten z werden dem Detektor DT durch den räumlichen Kanalschätzer KS zugeführt. Weiterhin werden auch die bestimmten Kanalkoeffizienten h vom räumlichen Kanalschätzer KS an den Detektor DT übermittelt.

Dieser Detektor DT kann daraufhin die Entzerrung und Fehlerkorrektur der Antennendaten z vornehmen und erzeugt die Symbole s. Die erfindungsgemäße Empfangseinrichtung EE zeigt dabei eine verbesserte Unterdrückung von Störsignalen, die durch die Kombination von räumlicher Filterung und Berücksichtigung von Laufzeitunterschieden von Signalkomponenten in einem einzigen Algorithmus erreicht wird. Die Anzahl der zueinander zumindest teilweise dekorrelierten Empfangssignale rx, also z.B. die Anzahl der Antennenelemente, spielt eine Rolle bei der Wirksamkeit der erfindungsgemäßen Funkstation bzw. des erfindungsgemäßen Verfahrens. Je mehr unabhängige Signale vorliegen, um so besser können diese aufgearbeitet werden. Als Mindestbedingungen sind dabei zumindest zwei teilweise dekorrelierte Empfangssignale rx vorzusehen, es kann jedoch auch jede höhere Zahl von teilweise dekorrelierten Empfangssignalen rx verwendet werden. Bei einer Anzahl von zueinander dekorrelierten Signalen rx, die den zu unterdrückenden Störkomponenten multipliziert mit der Anzahl der Kanalkoeffizienten h und addiert mit 1 entspricht, kann eine vollständige Unterdrückung der Störkomponenten erzielt werden.

## Patentansprüche

1. Verfahren zur Parametrierung einer Empfangseinrichtung (EE) mit zugeordneter intelligenter Antenneneinrichtung (AE) in einem Funksystem, bei dem
durch die intelligente Antenneneinrichtung (AE)
- zumindest zwei zueinander zumindest teilweise dekorrelierte Empfangssignale (rx) empfangen werden, und
durch die Empfangseinrichtung (EE)
- aus den Empfangssignalen (rx) abgeleitete digitale Signale (drx) jeweils mit Antennengewichtfaktoren (a) bewertet werden und zu Antennendaten (z, zd) überlagert werden,
- die Antennendaten (z) und in einem Kanalmodell (KM) bestimmte, zur Berücksichtigung der Mehrwegeausbreitung der Empfangssignale (rx) vorgesehene Kanalkoeffizienten (h) einem Detektor (DT) zur Entzerrung und Fehlerkorrektur der Antennendaten (z) zugeführt werden,
wobei während einer Trainingssequenz:
- in der Empfangseinrichtung (EE) vorliegende Testdaten (d) empfangen werden,
- den empfangenen Testdaten (d) zuordenbare Antennendaten (zd) und aus dem mit den vorliegenden Testdaten (d) gespeisten Kanalmodell (KM) abgeleitete Modellgrößen (k) einem Rechenwerk (RW) zugeführt werden,
- im Rechenwerk (RW)
- die Antennengewichtfaktoren (a) zur Unterdrückung von empfangenen Störgrößen und
- die Kanaikoeffizienten (h) zum Ausgleich der Laufzeitunterschiede verschiedener Signalkomponenten eines Empfangssignals (rx)
gleichzeitig bestimmt werden,
mit einem Algorithmus, der die Minimierung der Abweichung (e) von Antennendaten (zd) der Trainingssequenz und Modellgrößen (k) der Trainingssequenz vornimmt, und
diese bestimmten Antennengewichtfaktoren (a) und Kanalkoeffizienten (h) zur Bewertung der Empfangssignale (rx) außerhalb der Trainingssequenz herangezogen werden.

2. Verfahren nach Anspruch 1,
**dadurch gekennzeichnet,**
daß die Empfangssignale (rx) durch separate Antennen empfangen werden.

3. Verfahren nach Anspruch 1,
**dadurch gekennzeichnet,**
daß die Empfangssignale (rx) mit einer Antenne durch aufeinanderfolgendes Abtasten mit unterschiedlichen Abstrahlungsdiagrammen empfangen werden.

4. Verfahren nach einem der vorhergehenden Ansprüche,
bei dem der Algorithmus zur Bestimmung der Antennengewichtfaktoren (a) und der Kanalkoeffizienten (h) unter Ausschluß der Triviallösung (a=0; h=0) derart ausgebildet ist,
- daß die empfangenen Testdaten (d) mit mehreren vorbestimmten Sätzen von Antennengewichtfaktoren (a) bewertet und die Kanalkoeffizienten (h) mit einer minimalen Abweichung (e) von Antennendaten (zd) und Modellgrößen (k) bestimmt werden, und
- derjenige Satz von Antennengewichtfaktoren (a), bei dem die Abweichung von Antennendaten (zd) und Modellgrößen (k) am geringsten ist, und die zugehörigen bestimmten Kanalkoeffizienten (h) ausgewählt werden.

5. Verfahren nach einem Ansprüche 1 bis 3,
bei dem der Algorithmus zur Bestimmung der Antennengewichtfaktoren (a) und der Kanalkoeffizienten (h) unter Ausschluß der Triviallösung (a=0; h=0) derart ausgebildet ist,
daß die Minimierung der Abweichung (e) von Antennendaten (zd) und Modellgrößen (k) mit der Berechnung der kleinsten Fehlerquadrate vorgenommen wird.

6. Verfahren nach einem der vorhergehenden Ansprüche,
**dadurch gekennzeichnet,**
daß vor Bestimmung der Antennengewichtfaktoren (a) und der Kanalkoeffizienten (h) durch Ermittlung einer Verzögerung (M) eine Synchronisation der empfangenen Testdaten (d) mit den im Kanalmodell verarbeiteten Testdaten (d) vorgenommen wird und die Verzögerung (M) bei der Bewertung der Empfangssignale (rx) auch außerhalb der Trainingssequenz herangezogen wird.

7. Verfahren nach einem der vorhergehenden Ansprüche,
**dadurch gekennzeichnet,**
daß innerhalb der gleichen Verkehrsbeziehung die Antennengewichtfaktoren (a) auch beim Senden eingesetzt werden, wobei die in Senderichtung eingesetzten Antennengewichtfaktoren (a) mit denen in Empfangsrichtung auf die gleiche Weise korrespondieren wie die Antennendiagramme in beiden Richtungen.

8. Empfangseinrichtung (EE) mit zugeordneter intelligenter Antenneneinrichtung (AE) zum Empfang von zumindest zwei zueinander zumindest teilweise dekorrelierten Empfangssignalen (rx) in einem Funksystem,
wobei die Empfangseinrichtung (EE) zur Parametrierung:
- einen räumlichen Kanalschätzer (KS) für die Bewertung von aus den Empfangssignalen (rx) abgeleiteten digitalen Signale (drx) mit Antennengewichtfaktoren (a) und für deren Überlagerung zu Antennendaten (z, zd) enthält,
- einen Detektor (DT) für die Entzerrung und die Fehlerkorrektur der Antennendaten (z) durch Auswertung der Antennendaten (z) und in einem Kanalmodell (KM) bestimmter, zur Berücksichtigung der Mehrwegeausbreitung der Empfangssignale (rx) vorgesehener Kanalkoeffizienten (h) enthält, und
- ein Rechenwerk (RW) für die Bestimmung
- der Antennengewichtfaktoren (a) zur Unterdrückung von empfangenen Störgrößen und
- der Kanalkoeffizienten (h) zum Ausgleich der Laufzeitunterschiede verschiedener Signalkomponenten eines Empfangssignals (rx)
unter Verwendung eines Algorithmus zum Minimieren der Abweichung (e) von Antennendaten (zd) der Trainingssequenz und Modellgrößen (k) der in der Empfangseinrichtung (EE) vorliegenden Testdaten (d) während einer Trainingssequenz, enthält.

9. Empfangseinrichtung (EE) nach Anspruch 8,
die die Bewertung der Empfangssignale (rx) mit den bestimmten Antennengewichtfaktoren (a) und Kanalkoeffizienten (h) auch außerhalb der Trainingssequenz vorsieht.

10. Empfangseinrichtung (EE) nach einem der Ansprüche 8 oder 9,
bei der die intelligente Antenneneinrichtung (AE) derart ausgestaltet ist, daß zumindest zwei separate Antennen vorgesehen sind, die die Empfangssignale (rx) empfangen.

11. Empfangseinrichtung (EE) nach einem der Ansprüche 8 oder 9,
bei der die intelligente Antenneneinrichtung (AE) derart ausgestaltet ist, daß die Empfangssignale (rx) durch aufeinanderfolgendes Abtasten eines Eingangsdatensymbols mit unterschiedlichen Abstrahlungsdiagrammen empfangen werden.

12. Empfangseinrichtung (EE) nach einem der Ansprüche 8 bis 11,
bei der der räumliche Kanalschätzer (KS) während der Testsequenz die Bewertung der Signale (rx, drx) mit mehreren vorbestimmten Sätzen von Antennengewichten (a) vorsieht und das Rechenwerk (RW) die Bestimmung der Kanalkoeffizienten (h) derart vorsieht, daß derjenige Satz von Antennengewichtfaktoren (a), bei dem die Abweichung (e) von Antennendaten (zd) und Modellgrößen (k) am geringsten ist, und die zugehörigen bestimmten Kanalkoeffizienten (h) unter Ausschluß der Triviallösung (a=0; h=0) ausgewählt werden.

13. Empfangseinrichtung (EE) nach einem der Ansprüche 8 bis 11,
bei der das Rechenwerk (RW) während der Testsequenz das Bestimmen der Antennengewichte (a) und der Kanalkoeffizienten (h) mit einer minimalen Abweichung (e) von Antennendaten (zd) und Modellgrößen (k) nach der Methode der kleinsten Fehlerquadrate unter Ausschluß der Triviallösung (a=0; h=0) vorsieht.

14. Empfangseinrichtung (EE) nach einem der Ansprüche 8 bis 13,
bei der das Rechenwerk (RW) das Bestimmen einer Verzögerung (M) zur Synchronisation der empfangenen Testdaten (d) mit den im Kanalmodell verarbeiteten Testdaten (d) unabhängig oder abhängig von der Bestimmung der Kanalkoeffizienten (h) und Antennengewichtfaktoren (a) vorsieht und der räumliche Kanalschätzer (KS) die Verzögerung (M) bei der Bewertung der Signale (drx, rx) zur Synchronisation auch außerhalb der Trainingssequenz vorsieht.

15. Empfangseinrichtung (EE) nach Anspruch 14,
bei der die Synchronisation dadurch bewirkt wird, daß an mehreren Positionen der Antennendaten (zd) eine Bestimmung der Kanalkoeffizienten (h) und Antennengewichtfaktoren (a) vorgenommen wird und die Lösung mit der geringsten Abweichung (e) ausgewählt wird.

16. Funkstation mit einer Empfangseinrichtung (EE) nach einem der Ansprüche 8 bis 15.

17. Funkstation nach Anspruch 16,
bei der innerhalb der gleichen Verkehrsbeziehung die Antennengewichtfaktoren (a) auch für die Bewertung der Sendesignale vorgesehen sind.

18. Funkstation nach Anspruch 17,
die im Zeitlagenmultiplex betrieben wird und die die Bestimmung der Parameter (a, h, M) für jeweils eine Zeitlage vorsieht.

19. Funkstation nach einem der Ansprüche 17 oder 18,
die als Basisstation eines Mobilfunksystems betrieben wird.
